# EUROPÄISCHE PATENTSCHRIFT

(11) **EP 2 938 444 B1**
(45) Veröffentlichungstag und Bekanntmachung des Hinweises auf die Patenterteilung: **26.04.2017**
(21) Anmeldenummer: 13831848.0
(22) Anmeldetag: 19.12.2013
(51) Int. Cl.: B08B 1/02, B08B 1/00, B65G 45/14, B65G 45/22, B65G 45/24

(54) **REINIGUNGSANLAGE FÜR EIN ENDLOSBAND AUS METALL SOWIE BANDGIESSANLAGE MIT EINER SOLCHEN REINIGUNGSANLAGE**
CLEANING UNIT FOR A CONTINUOUS METAL STRIP AS WELL AS A STRIP CASTING INSTALLATION WITH SUCH A CLEANING UNIT
DISPOSITIF DE NETTOYAGE POUR UNE BANDE SANS FIN EN METAL AINSI QU'UNE INSTALLATION DE COULÉE DE BANDES AVEC CETTE UNITE DE NETTOYAGE

(30) Priorität: 27.12.2012 AT 506232012; 27.12.2012 US 201213727722
(43) Veröffentlichungstag der Anmeldung: 04.11.2015
(73) Patentinhaber: Berndorf Band GmbH, 2560 Berndorf (AT)
(72) Erfinder: KAGER, Franz, A-2320 Schwechat (AT)
(74) Vertreter: Burger, Hannes
(86) Internationale Anmeldenummer: PCT/AT2013/050258
(87) Internationale Veröffentlichungsnummer: WO 2014/100847

(56) Entgegenhaltungen:
- EP-A1- 0 527 316
- DE-A1- 3 734 236
- DE-U1- 9 310 626
- FR-A1- 2 203 122

## Beschreibung

Die Erfindung betrifft eine Anordnung, umfassend ein Endlosband aus Metall, wenigstens zwei Umlenkrollen, um welche das Endlosband geführt ist, und einen ersten Antrieb, welcher dazu eingerichtet ist, das Metallband zu bewegen. Darüber hinaus umfasst die Anordnung ein textiles Band, eine Andruckvorrichtung, welche dazu eingerichtet ist, das textile Band gegen das Metallband zu drücken, und einen zweiten Antrieb, welcher dazu eingerichtet ist, das textile Band an der Andruckvorrichtung vorbei zu bewegen.

Ein angetriebenes Endlosband aus Metall ist aus dem Stand der Technik grundsätzlich bekannt und kann beispielsweise für eine Bandgießanlage eingesetzt werden. Bandgießanlagen werden in der Regel für die Herstellung plattenförmiger oder filmartiger Werkstoffe eingesetzt. Beispielsweise werden sie zur Herstellung von Filmen für die Fotografie, LCD-Bildschirmen oder aber von Kunststein ("Engineered Stone") verwendet. Dabei wird ein flüssiger oder pastöser Werkstoff auf ein angetriebenes/bewegtes Band aufgetragen und der zumindest teilweise erstarrte Werkstoff abgehoben. Beispielsweise kann ein flüssiger Film auf das Endlosband gegossen werden, unterschiedliche Prozesse wie Erwärmen, Dehnen, Trocknen etc. durchlaufen und anschließend vom Band abgeschabt werden. Bei derartigen Bandgießanlagen kann es zu prozessbedingten Verschmutzungen der Endlosbänder kommen, was Reinigungsarbeiten erforderlich macht. Stillstandszeiten und damit verbundene finanzielle Einbußen sind die Folge.

Zudem offenbart die DE 37 34 236 A1 eine Vorrichtung zur Entfernung von Kühlschmierstoffen und deren eutektischen Gemischen aus Metalloxiden und anderen feinkörnigen Fremdstoffen von einem laufendem Bandmaterial, insbesondere von einem Metallband, bei der parallel zum Bandmaterial ein saugfähiges endloses Band angeordnet ist, welches über Umlenkvorrichtungen geführt ist und im zum Bandmaterial gleichlaufenden Bereich auf dem Bandmaterial aufliegt.

Die DE 199 29 843 A1 offenbart weiterhin eine Oberflächen-Behandlungsvorrichtung, insbesondere zum Befeuchten und/oder Reinigen von schnell laufenden Oberflächen, insbesondere Papierbahnen. Eine Flüssigkeits- Übertragungswalze überträgt dabei Flüssigkeit aus einer Flüssigkeitswanne, in welche sie teilweise eingetaucht ist, auf eine von ihr kontaktierbare Behandlungsbahn.

Die DE 22 49 740 offenbart darüber hinaus ein Verfahren zum Reinigen von schnell laufenden Folienbahnen durch Auftrag von Reinigungsflüssigkeit und gleichzeitiger Ausübung mechanischer Säuberungswirkung auf zumindest eine Bahnoberfläche mittels mindestens eines entgegengesetzt zur Bahnlaufrichtung kontinuierlich bewegten Körpers mit einer darauf befestigten Reinigungsauflage und nachfolgender Abtrocknung der Bahnoberfläche.

Die DD 267 673 A1 offenbart weiterhin eine Vorrichtung zum Reinigen von Folienbahnoberflächen, bestehend aus einem am Maschinengestell befestigten Rahmen, einer Führungswalze und einem auf Führungsrollen gelagerten Reinigungsband, wobei die Führungsrollen des Reinigungsbandes auf einem Rahmen angeordnet sind, welcher in einem exzentrischen Punkt des Rollensystems gegen eine Führungswalze schwenkbar gelagert ist.

Schließlich offenbart die EP 0 527 316 A1 eine Bahnreinigungsanlage zur Reinigung einer zu bedruckenden Bahn, bevor diese in ein Druckwerk einer Rollendruckmaschine läuft. Zur Reinigung der Druckbahn dient ein Waschtuch, welches auf die Druckbahn gedrückt wird. Eine Transportvorrichtung transportiert das Waschtuch so, dass nacheinander andere feuchte Waschtuchabschnitte mit der Druckbahn in Kontakt gebracht werden.

Es ist daher eine Aufgabe der vorliegenden Erfindung, eine verbesserte Anordnung der genannten Art anzugeben. Insbesondere soll eine möglichst wirkungsvolle und wartungsarme Reinigung des Bandes ermöglicht werden.

Die Aufgabe der Erfindung wird mit einer Anordnung der eingangs genannten Art gelöst, wobei:
- eine quer zur Bewegungsrichtung des Metallbands angeordnete Mehrlippendichtung vorgesehen ist,
- Hohlräume zwischen den Lippen der Mehrlippendichtung mit einem Ablauf verbunden sind und
   a) eine Benetzungseinrichtung vorgesehen ist, welche dazu vorbereitet ist, das textile Band mit einer Flüssigkeit zu benetzen, wobei die Mehrlippendichtung einem Berührbereich zwischen dem textilen Band und dem Metallband in einer Hauptbewegungsrichtung des Metallbands nachgelagert ist.

Die Aufgabe wird auch mit einer Bandgießanlage gelöst, umfassend eine Anordnung der oben genannten Art sowie eine Einrichtung zur Aufbringung eines Werkstoffs auf das Metallband.

Durch die vorgeschlagenen Maßnahmen kann das Metallband auf wirkungsvolle Weise von Schmutz befreit werden, denn durch die Bewegung des textilen Bands an der Andruckvorrichtung vorbei kann stets ein sauberer und/oder unverbrauchter Bereich des textilen Bands in Kontakt mit dem Metallband gebracht und dieses damit gesäubert werden. Das textile Band kann dabei schrittweise oder auch kontinuierlich an der Andruckrichtung vorbei bewegt werden. Die Andruckvorrichtung kann beispielsweise als Andruckplatte oder auch als Andruckrolle ausgeführt sein. Vorzugsweise ist das textile Band im Wesentlichen so breit wie das Metallband. Denkbar ist aber auch, dass das Metallband nur bereichsweise von einem textilen Band gesäubert wird. Insbesondere können auch mehrere schmale Bänder nebeneinander angeordnet sein und auf diese Weise die gesamte oder im Wesentlichen gesamte Breite des Metallbands säubern.

Die eingesetzte Dichtung umfasst mehrere Lippen mit dazwischen angeordneten Hohlräumen. Damit sich in den genannten Hohlräumen Flüssigkeit nicht dauerhaft ansammeln kann, sind diese mit je einem Ablauf verbunden. Damit wird das Metallband beim Passieren der Lippen zusehends trockener. Vorteilhaft wird die Mehrlippendichtung einstückig ausgeführt. Denkbar ist natürlich auch, dass die Mehrlippendichtung mehrstückig ausgeführt ist. Beispielsweise können die Lippen in einen Grundkörper eingesteckt werden.

Generell kann die vorgestellte Anordnung eine Benetzungseinrichtung umfassen, welche dazu vorbereitet ist, das textile Band mit einer Flüssigkeit zu benetzen, insbesondere mit einer Reinigungsflüssigkeit und/oder einem Lösungsmittel (Fall a). Durch die Benetzungseinrichtung kann das textile Band also befeuchtet und damit dessen Reinigungsleistung gesteigert werden. Insbesondere ist dies dann der Fall, wenn das Band mit einer Reinigungsflüssigkeit und/oder einem Lösungsmittel, beispielsweise Aceton getränkt wird.

Denkbar ist aber auch, dass die Anordnung zusätzlich oder alternativ dazu eine Einrichtung zum Auftragen einer Flüssigkeit auf das Metallband aufweist (Fall b). Beispielsweise kann auf diese Weise kann loser Schmutz vom Metallband abgespült und/oder auf dem Metallband anhaftender Schmutz aufgeweicht respektive angelöst werden.

Vorteilhaft werden Reinigungs- und Wartungsarbeiten durch die vorgeschlagenen Maßnahmen wesentlich vereinfacht. In der Regel können diese Tätigkeiten im laufenden Betrieb beziehungsweise Regelbetrieb durchgeführt werden, das heißt während der Herstellung der plattenförmigen oder filmartigen Werkstoffe. Dadurch werden die Wirtschaftlichkeit einer Bandgießanlage sowie die Planbarkeit des Produktionsprozesses wesentlich verbessert. Durch die vereinfachte Möglichkeit, das Endlosband zu reinigen, wird es über einen längeren Zeitraum in optimalem Zustand gehalten und damit insgesamt die Produktqualität verbessert.

Weitere vorteilhafte Ausgestaltungen und Weiterbildungen der Erfindung ergeben sich aus den Unteransprüchen sowie aus der Beschreibung in Zusammenschau mit den Figuren.

Besonders vorteilhaft ist es, wenn die Anordnung eine mit dem zweiten Antrieb gekoppelte Haspel umfasst, auf der ein Ende des textilen Bands befestigt ist. Auf diese Weise kann verbrauchtes Band aufgewickelt werden, beispielsweise für eine spätere Entsorgung oder Aufbereitung. Das unverbrauchte textile Band kann in analoger Weise von einer zweiten Haspel abgewickelt werden.

Vorteilhaft ist es aber auch, wenn das textile Band als Endlosband ausgeführt ist, welches um wenigstens zwei Umlenkrollen geführt ist, von denen wenigstens eine mit dem zweiten Antrieb gekoppelt ist. Im speziellen kann der verbrauchte Bereich des textilen Bands an einer Aufbereitungsstation vorbeigeführt werden, an der das textile Band für eine weitere Reinigung des Metallbands aufbereitet wird. Beispielsweise kann in einer solchen Aufbereitungsstation Schmutz aus dem textilen Band ausgewaschen werden. Vorteilhaft kann das textile Band solcherart mehrfach am Metallband vorbeigeführt werden, bis es entsorgt werden oder einer spezielleren Wiederaufbereitung zugeführt werden muss.

Vorzugsweise ist eine Bewegungsgeschwindigkeit des Metallbands größer als die des textilen Bands. Auf diese Weise kann ein allzu hoher Verbrauch an textilen Bändern vermieden werden.

Günstig ist es, wenn das textile Band aus einem Vlies, einem Gewebe, einem Gestrick, einem Geflecht, einem Gewirk, einem Filz oder einer Kombination der genannten Textilien besteht. Durch Wahl eines entsprechenden Stoffs kann das textile Band optimal auf den geplanten Einsatzzweck angepasst werden, insbesondere wenn verschiedene Stoffe kombiniert werden. Beispielsweise kann ein filzartiger Stoff, welcher für die Reinigung des Bands ausgelegt ist, auf einen leinenartigen Stoff aufkaschiert sein, sodass das textile Band an Stabilität gewinnt.

Vorzugsweise umfasst die vorgestellte Anordnung einen dem textilen Band in einer Hauptbewegungsrichtung des Metallbands vorgelagerten und auf das Metallband wirkenden Schaber. Mit Hilfe des Schabers kann das Metallband von grobem Schmutz befreit werden. Denkbar ist auch, dass das auf dem Metallband hergestellte Produkt, also zum Beispiel ein Film oder ein Kunststein, von einem solchen Schaber abgehoben wird. Als "Hauptbewegungsrichtung" wird im Rahmen der Erfindung jene Bewegungsrichtung des Endlosbands verstanden, in welcher die Herstellung der plattenförmigen oder filmartigen Werkstoffe erfolgt. Demgemäß ist dies jene Bewegungsrichtung des Endlosbands, in der das von der Auftragseinrichtung auf das Endlosband aufgetragene Material vom Endlosband im Wesentlichen über das Obertrum zur Abhebeeinrichtung transportiert wird. Das "Obertrum" bezeichnet den oberen, tragenden Teil eines angetriebenen Endlosbands, wohingegen das "Untertrum" den unteren, nicht tragenden Teil des Endlosbands bezeichnet. Eine zeitweilige Bewegung des Metallbands entgegen dessen Hauptbewegungsrichtung wird im Rahmen der Erfindung aber nicht ausgeschlossen.

Günstig ist es, wenn die vorgestellte Anordnung eine zwischen dem Schaber und dem textilen Band angeordnete und auf das Metallband wirkende Reinigungsbürste umfasst. Auf diese Weise kann das Metallband weiter von grobem Schmutz befreit werden. Die Reinigung erfolgt in diesem Fall stufenweise entsprechend dem Grad der Verschmutzung. Besonders grobe Verunreinigung wird mit dem Schaber entfernt, mittlere Verschmutzung mit der Reinigungsbürste und ein Rest an Verunreinigung mit dem textilen Band. Um die Reinigungsleistung zu verbessern, können insbesondere der Reinigungsbürste Hochdruck-Reinigungsdüsen vor- und/oder nachgelagert sein.

Günstig ist es, wenn die Anordnung eine dem textilen Band in einer Hauptbewegungsrichtung des Metallbands nachgelagerte und auf das Metallband wirkende Absaugeinrichtung umfasst.

Auf diese Weise können Flüssigkeit und Fusseln, welche eventuell nach dem textilen Band auf dem Band verbleiben, abgesaugt werden, sodass die Sauberkeit des Metallbands noch weiter verbessert werden kann.

Besonders vorteilhaft ist es schließlich auch, wenn die Anordnung eine auf das Metallband ausgerichtete Sprüheinrichtung und im Randbereich des Metallbands angeordnete Leitbleche umfasst, welche schräg zur Mitte des Metallbands ausgerichtet sind. Dadurch kann verhindert werden, dass die unter Umständen mit sehr hohem Druck aufgebrachte Flüssigkeit zwischen einer Abdichtung am Rand des Metallbands hindurch gedrückt wird. Durch die Leitbleche werden die Flüssigkeitsstrahlen vom Randbereich weitgehend ferngehalten beziehungsweise von diesem weg gelenkt.

Zum besseren Verständnis der Erfindung wird diese anhand der nachfolgenden Figuren näher erläutert. Es zeigen:
- Fig. 1: eine erste schematisch dargestellte Variante einer Bandreinigungsanlage mit einem Reinigungsband und zwei Haspeln in Seitenansicht;
- Fig. 2: wie Fig. 1, nur mit einem zusätzlichen Schaber, einer zusätzlichen Reinigungsbürste und einer zusätzlichen Absaugeinrichtung;
- Fig. 3: wie Fig. 2, nur mit einem endlosen Reinigungsband;
- Fig. 4: eine beispielhafte Mehrlippendichtung in Unteransicht;
- Fig. 5: die Mehrlippendichtung aus Fig. 4 im Schnitt;
- Fig. 6: eine Variante einer Sprüheinrichtung mit schräg zur Bewegungsrichtung des Metallbands angeordneten Leitblechen;
- Fig. 7: eine Variante einer Sprüheinrichtung mit schräg zur Oberfläche des Metallbands angeordneten Leitblechen;
- Fig. 8: ein schematisch dargestelltes Beispiel für eine seitliche Abdichtung des Metallbands im Querschnitt und
- Fig. 9: wie Fig. 8, nur dass lediglich eines der Dichtsysteme mit einem aufblasbaren Körper ausgestattet ist.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

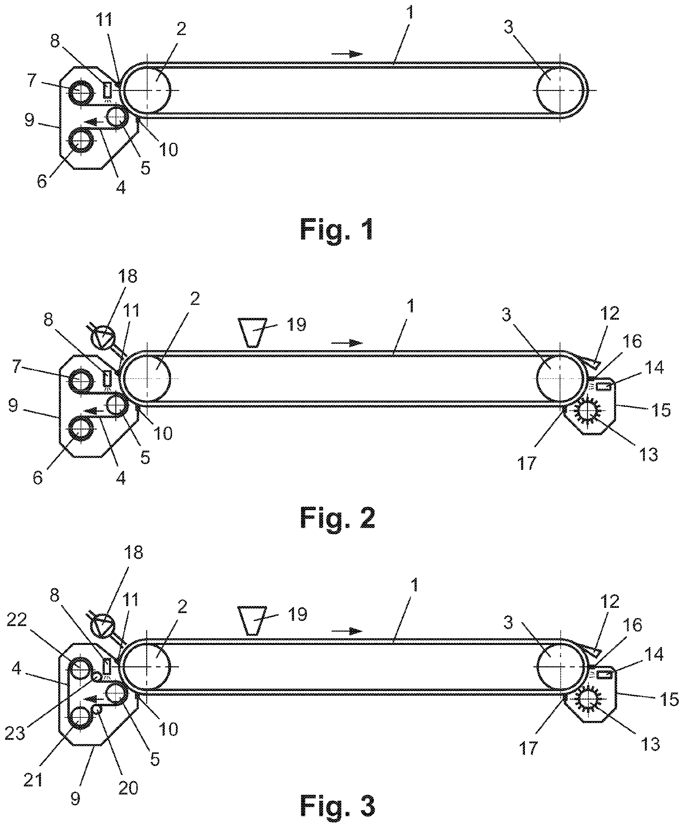

Fig. 1 zeigt eine erste schematisch dargestellte Anordnung, umfassend ein Endlosband 1 aus Metall und zwei Umlenkrollen 2, 3, um welche das Endlosband 1 geführt ist. Die Anordnung umfasst weiterhin einen ersten Antrieb, welcher dazu eingerichtet ist, das Metallband 1 zu bewegen. In diesem Beispiel wird angenommen dass der Antrieb (z.B. ein Elektromotor) mit der Umlenkrolle 2 gekoppelt ist und diese dreht. Die gezeigte Anordnung umfasst weiterhin ein textiles Band 4, eine Andruckvorrichtung 5, welche dazu eingerichtet ist, das textile Band 4 in einem Berührbereich gegen das Metallband 1 zu drücken, und einen zweiten Antrieb, welcher dazu eingerichtet ist, das textile Band 4 an der Andruckvorrichtung 5 vorbei zu bewegen. Die Andruckvorrichtung ist hier als drehbar gelagerte Andruckrolle 5 ausgebildet. Denkbar ist aber auch, dass an dieser Stelle eine feststehende Andruckplatte vorgesehen ist. Der zweite Antrieb (z.B. wiederum als Elektromotor ausgebildet) ist mit einer Haspel 6 gekoppelt, an der ein Ende des textilen Bands 4 befestigt ist und die mit dem zweiten Antrieb in Drehung versetzt werden kann. Das andere Ende des textilen Bands 4 ist an einer zweiten Haspel 7 befestigt, die vorzugsweise gebremst ist, um das textile Band 4 zu spannen. Selbstverständlich kann die zweite Haspel 7 aber auch leerlaufen.

Im Betrieb wird das textile Band 4 somit von der zweiten Haspel 7 abgewickelt und auf die erste Haspel 6 aufgewickelt, sodass das Metallband 1 stets mit einer unverbrauchten Stelle des textilen Bands 4 in Berührung gebracht werden kann. Das textile Band 4 kann dabei schrittweise oder auch kontinuierlich bewegt werden. Vorzugsweise ist eine Bewegungsgeschwindigkeit des Metallbands 1 größer ist als die des textilen Bands 4 und vorzugsweise wird das textile Band 4 wie in der Fig. 1 dargestellt gegen die Bewegungsrichtung des Metallbands 1 bewegt. Auf diese Weise wird verhindert, dass das textile Band 4 durch das Metallband 1 unkontrolliert von der Haspel 7 abgewickelt wird. Die Haspel 7 kann insbesondere in diesem Fall auch leerlaufen.

Generell kann das textile Band 4 aus einem Vlies, einem Gewebe, einem Gestrick, einem Geflecht, einem Gewirk, einem Filz oder einer Kombination der genannten Textilien bestehen. Beispielsweise kann ein weiches, nicht fusselndes Mikrofasergewebe eingesetzt werden, das die Metalloberfläche weder zerkratzt noch in unerwünschter Weise mit Fusseln verunreinigt. Denkbar ist beispielsweise auch, dass ein Reinigungsvlies auf einem Gewebe aufkaschiert ist, wobei das Reinigungsvlies eben zur Reinigung des Metallbands 1 vorgesehen ist, das Gewebe dem textilen Band 4 dagegen mehr Stabilität verleiht.

In einer bevorzugten Ausführungsform kann das textile Band 4 wie in Fig. 1 dargestellt durch eine Benetzungseinrichtung 8 mit einer Flüssigkeit benetzt werden, insbesondere mit einer Reinigungsflüssigkeit und/oder einem Lösungsmittel wie Aceton. Beispielsweise kann die Flüssigkeit auf das textile Band 4 aufgesprüht werden, oder es tropft einfach auf das textile Band 4 herab. Denkbar ist auch, dass die Flüssigkeit mit einer eigenen Walze aufgebracht wird. Damit sich die Flüssigkeit respektive deren Dämpfe (z.B. Lösungsmitteldämpfe) nicht unkontrolliert verbreiten können, sind das textile Band 4 sowie die zu dessen Führung nötigen Komponenten 5, 6, 7 und die Benetzungseinrichtung 8 in einem Gehäuse 9 untergebracht, das mit Hilfe von Dichtungen 10 und 11 gegen das Metallband 1 abgedichtet ist.

Die Fig. 2 zeigt nun eine Ausführungsform, welche auf der in Fig. 1 dargestellten Anordnung basiert. Zusätzlich umfasst diese einen dem textilen Band 4 in einer Hauptbewegungsrichtung (siehe Pfeil) des Metallbands 1 vorgelagerten und auf das Metallband 1 wirkenden Schaber 12, welcher grobe Verunreinigungen vom Metallband 1 abhebt. Zwischen dem Schaber 12 und dem textilen Band 4 ist eine auf das Metallband 1 wirkende Reinigungsbürste 13, hier eine rotierende Bürste, vorgesehen, welche ebenfalls stärkere Verschmutzung vom Metallband 1 entfernt. Um den Reinigungsprozess zu unterstützen ist der Reinigungsbürste 13 eine Sprühdüse 14 vorgelagert. Selbstverständlich kann auch eine Vielzahl an Sprühdüsen 14 vorgesehen sein. Beispielsweise kann Wasser, insbesondere Warmwasser, aufgesprüht werden. Um eine unkontrollierte Verbreitung von Schmutz und Flüssigkeit zu verhindern, sind die Reinigungsbürste 13 und die Sprühdüse 14 in einem Gehäuse 15 angeordnet, welches mit Dichtungen 16 und 17 gegenüber dem Metallband 1 abgedichtet ist.

Schließlich ist dem textilen Band 4 in einer Hauptbewegungsrichtung des Metallbands 1 eine auf das Metallband 1 wirkende Absaugeinrichtung 18 nachgelagert. Die Absaugeinrichtung 18 kann beispielsweise durch ein Gebläse realisiert sein. Dadurch kann Flüssigkeit, die trotz der Dichtung 11 auf dem Metallband 1 verblieben ist, abgesaugt werden.

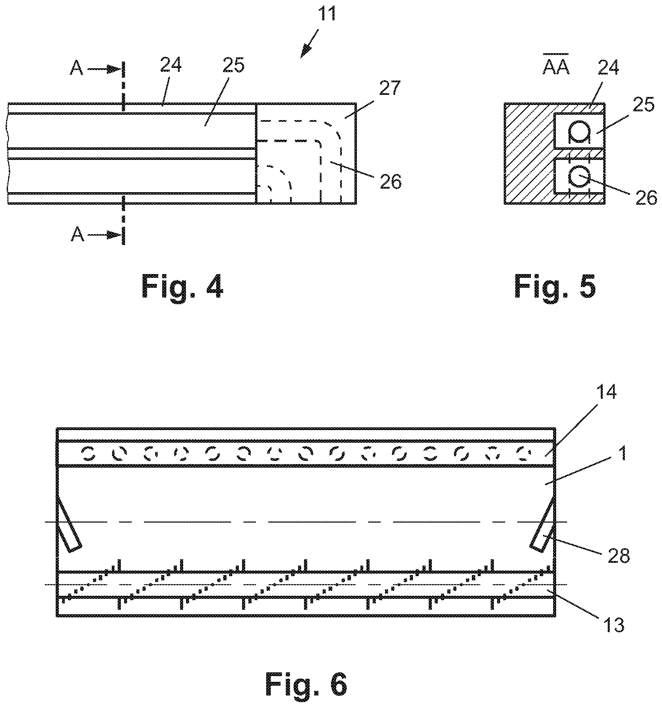

Generell ist wenigstens eine der Dichtungen 10, 11, 16 und/oder 17 als Mehrlippendichtung ausgeführt (siehe auch Fig. 4 und 5). Insbesondere betrifft dies die Dichtung 11, welche dem Berührbereich zwischen dem textilen Band 4 und dem Metallband 1 in der Hauptbewegungsrichtung des Metallbands 1 nachgelagert ist. Die Dichtung 11 ist weiterhin der Sprühdüse 14 nachgelagert. Selbiges gilt für die Dichtungen 10 und 17.

Insgesamt ergibt sich somit ein Reinigungsprozess, bei dem grober Schmutz vom Metallband 1 abgeschabt wird, das Metallband 1 in Folge mit Hochdruck-Sprühdüsen 14 und einer Reinigungsbürste 13 weiter von starken Verunreinigungen befreit wird, Schmutzwasser mit Hilfe der Dichtung 17 vom Metallband 1 abgestreift wird, das Metallband 1 mit Hilfe des textilen (und insbesondere flüssigkeitsgetränkten) Bands 4 endgereinigt wird und verbleibende Restflüssigkeit auf dem Metallband 1 mit Hilfe der Dichtung 11 abgestreift, respektive mit Hilfe der Absaugeinrichtung 18 abgesaugt wird. Auf der linken Seite des Obertrums wird somit ein praktisch vollständig gesäubertes Metallband 1 zur Verfügung gestellt, das für einen Herstellungsprozess eingesetzt werden kann, beispielsweise für die Herstellung von Filmen oder Kunststein.

In der Fig. 2 ist auf dem Obertrum des Metallbands 1 dazu eine Einrichtung 19 zur Aufbringung eines Werkstoffs auf das Metallband 1 angeordnet, welche hier als einfacher Trichter ausgeführt ist. Die Fig. 2 offenbart somit eine schematisch dargestellte Bandgießanlage. Selbstverständlich ist diese Ausführungsform nur rein illustrativ zu sehen, und es sind auch andere Bauformen für die Einrichtung 19 vorstellbar.

Die in der Fig. 3 dargestellte Anordnung ist ähnlich zu der in Fig. 2 dargestellten Anordnung. Im Unterschied dazu ist das textile Band 4 aber als Endlosband ausgeführt, welches um die Umlenkrollen 20..23 geführt ist, von denen wenigstens eine mit dem zweiten Antrieb gekoppelt ist, beispielsweise die Rolle 21.

Die Figuren 4 und 5 zeigen nun, wie die Dichtungen 10, 11, 16 und 17 ausgeführt sein könnten. Exemplarisch wird die Dichtung 11 dargestellt, und zwar in Fig. 4 in Unteransicht und in Fig. 5 im Schnitt AA. Hohlräume 25 zwischen den Lippen 24 der Mehrlippendichtung 11 sind in diesem Beispiel mit je einem Ablauf 26 verbunden, welcher in einem Randstück 27 der Mehrlippendichtung 11 angeordnet ist. Durch diese Maßnahmen kann eine besonders gute Trocknung des Metallbands 1 erzielt werden, da sich vor den in Bewegungsrichtung des Metallbands 1 nachgeordneten Lippen 24 langfristig keine Flüssigkeit aufstauen kann. Das Metallband 1 wird somit bei Passieren der einzelnen Lippen 24 sukzessive trockener. Die Mehrlippendichtung 11 kann einstückig ausgeführt sein, oder aber auch aus mehreren Teilen bestehen. Beispielsweise kann das Randstück 27 als gesonderter Teil vorliegen. Denkbar wäre auch, dass einzelne Dichtlippen 24 in einen Grundkörper eingesteckt werden.

Fig. 6 zeigt nun eine beispielhafte und schematisch dargestellte Anordnung, welche die auf das Metallband 1 ausgerichtete Sprüheinrichtung 14 sowie im Randbereich des Metallbands 1 angeordnete Leitbleche 28 beziehungsweise Leitvorrichtungen umfasst, welche schräg zur Mitte des Metallbands 1 ausgerichtet sind. Bezogen auf die Fig. 2 oder 3 zeigt die Fig. 6 eine Seitenansicht von links. Durch die vorgeschlagenen Maßnahmen wird vermieden, dass die unter Umständen mit sehr hohem Druck aufgebrachte Flüssigkeit zwischen einer Abdichtung am Rand des Metallbands 1 hindurch gedrückt wird. Durch die Leitbleche 28 werden die Flüssigkeitsstrahlen vom Randbereich weitgehend ferngehalten beziehungsweise von diesem weg gelenkt.

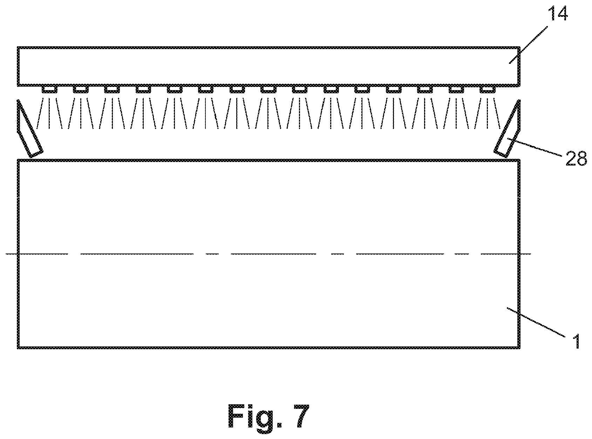

In der Fig. 6 sind die Leitbleche 28 bezogen auf die Bewegungsrichtung des Metallbands 1 schräg ausgerichtet. Denkbar ist aber auch, dass diese in Bezug auf die Oberfläche des Metallbands 1 schräg ausgerichtet sind. Die Fig. 7 zeigt dazu eine beispielhafte Seitenansicht, bei der die Sprüheinrichtung 14 das Metallband 1 von oben besprüht. Die Leitbleche 28 halten den Rand des Metallbands 1 auch bei einer solchen Anordnung weitgehend frei von Flüssigkeitsstrahlen, beziehungsweise lenken diese vom Rand weg.

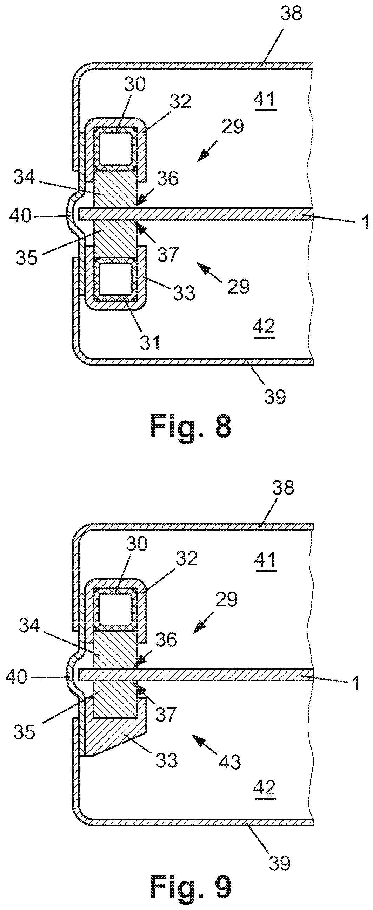

Fig. 8 zeigt nun ein schematisch dargestelltes Beispiel für eine seitliche Abdichtung des Metallbands 1 in dessen Längsrichtung beziehungsweise Bewegungsrichtung im Querschnitt. Die in diesem Beispiel oben und unten angeordneten Dichtsysteme 29 umfassen je zwei längliche aufblasbare flexible Körper 30, 31, Halterungen 32, 33, in welche die genannten aufblasbaren Körper 30, 31 eingebettet sind, und längliche Körper 34, 35 aus Teflon, welcher auf den Halterungen 32, 33 abgewandten Seiten der aufblasbaren flexiblen Körper 30, 31 angeordnet sind. Die Teflonkörper 34, 35 weisen auf einer dem aufblasbaren Körper 30, 31 abgewandten Seite respektive auf einer dem Metallband 1 zugewandten Seite zudem Dichtflächen 36, 37 auf.

Im vorliegenden Beispiel sind die Teflonkörper 34, 35 in den Halterungen 32, 33 für die aufblasbaren Körper 30, 31 verschiebbar geführt. Prinzipiell ist es daher möglich, dass die Teflonkörper 34, 35 auf den aufblasbaren Körpern 30, 31 lediglich aufliegen. Eine Befestigung der Teflonkörper 34, 35 auf den aufblasbaren Körpern 30, 31 ist in diesem Fall nicht zwingend nötig. Selbstverständlich ist aber auch denkbar, dass die Teflonkörper 34, 35 auf dem aufblasbaren Körper 30, 31 befestigt sind. Eine Führung der Teflonkörper 34, 35 kann dann gegebenenfalls entfallen.

Durch die mögliche Bewegung der Teflonkörper 34, 35 in den Halterungen 32, 33 können Unebenheiten sowie auch Abrieb der Teflonkörper 34, 35 gut ausgeglichen werden. Mit zunehmendem Abrieb werden die Teflonkörper 34, 35 weiter aus den Halterungen 32, 33 herausgedrückt.

Im vorliegenden Beispiel sind die Halterungen 32, 33 durch ein U-Profil gebildet. Dadurch können die Halterungen 32, 33 leicht hergestellt werden, beispielsweise aus einem Metallprofil oder einem umgekanteten Blech.

Weiterhin weisen die Teflonkörper 34, 35 im vorliegenden Beispiel einen rechteckförmigen Querschnitt auf. Dadurch können auch die Teflonkörper 34, 35 leicht hergestellt werden und verfügen darüber hinaus über ebene Dichtflächen 36, 37.

In der in Fig. 1 dargestellten Anordnung sind die zwei Dichtsysteme 29 einander gegenüberliegend auf einer Oberseite und einer Unterseite des Metallbands 1 angeordnet. Dadurch kann vermieden werden, dass sich das Metallband 1 bei Druckbeaufschlagung der aufblasbaren Körper 30, 31 von diesem weg biegt und somit eine Dichtung erschwert wird (vergleiche dazu auch Fig. 9). Unterstützt wird dies dadurch, dass beide einander gegenüberliegend angeordneten Dichtsysteme 29 über aufblasbare Körper 30, 31 verfügen.

In der in Fig.9 dargestellten Anordnung sind die einander gegenüberliegend angeordneten Dichtsysteme 29 mit Hilfe der Brücke 40 dicht miteinander verbunden. Auf diese Weise können ein Raum 41 oberhalb des Metallbands 1, welcher durch die obere Haube 38 gebildet ist, und ein Raum 42 unterhalb des Metallbands 1, welcher durch die untere Haube 39 gebildet ist, dicht miteinander verbunden werden. Selbstverständlich wäre es aber auch möglich, die Brücke 40 wegzulassen und demzufolge nur einen oberen Raum 41, nur einen unteren Raum 42 oder getrennte Räume 41 und 42 vorzusehen.

Fig. 9 zeigt nun ein zweites schematisch dargestelltes Beispiel für eine Anordnung mit einem Dichtsystem 29 und einem Dichtsystem 43 sowie einem bewegten Metallband 1 im Querschnitt, welche der in Fig. 8 dargestellten Anordnung sehr ähnlich ist. Im Unterschied dazu ist aber nur das obere Dichtsystem 29 mit einem aufblasbaren Körper 30 ausgestattet, das untere Dichtsystem 43 weist dagegen keinen aufblasbaren Körper auf. Dadurch ergibt sich ein vergleichsweise einfacher Aufbau der Anordnung.

Durch die vorgeschlagenen Maßnahmen wird eine wirkungsvolle Abdichtung des Metallbands 1 erzielt. Einerseits kann der Teflonkörper 34, 35 mit Hilfe des aufblasbaren Körpers 30, 31 gegen das Metallband 1 gedrückt werden, wodurch zwischen Teflonkörper 34, 35 und Metallband 1 eine Abdichtung entsteht, andererseits ist die Reibung durch die vorgenommene Materialwahl trotz der Abdichtung gering, sodass weder auf den Teflonkörper 34, 35 noch auf das Metallband 1 übermäßige Kräfte aufgebracht werden. In Folge kann auch eine Antriebsleistung für das Metallband 1 klein gehalten werden. Durch Variation des Drucks im aufblasbaren Körper 30, 31 kann überdies auf einfache Weise eine gewünschte Anpresskraft eingestellt werden. Die Dichtung mit Hilfe des Dichtsystems kann beispielsweise flüssigkeitsdicht ausgeführt sein, sie kann aber beispielsweise auch gasdicht ausgeführt sein.

Vorzugsweise sind die aufblasbaren Körper 30, 31, mit einem Druckluftversorgungssystem verbunden, welches dazu eingerichtet ist, die aufblasbaren Körper 30, 31 im Betrieb mit im Wesentlichen konstantem Druck zu beaufschlagen. Auf diese Weise werden die Teflonkörper 34, 35 mit konstanter Kraft auf das Metallband 1 gedrückt, wodurch reproduzierbare Ergebnisse hinsichtlich der Dichtheit und auch hinsichtlich einer auf das Metallband 1 wirkenden und für eine Bewegung notwendigen Zugkraft erzielt. Dies gilt auch bei Abnutzung der Teflonkörper 34, 35 da zwar der Druck in den aufblasbaren Körpern 30, 31 konstant ist, das Volumen in denselben aber variabel sein kann. Bei zunehmender Abnutzung der Teflonkörper 34, 35 steigt das Volumen in den aufblasbaren Körpern 3, 4, sodass der Teflonkörper 34, 35 mit den Dichtflächen 36, 37 stets auf dem Metallband 1 aufliegt.

Günstig ist es weiterhin, wenn der Teflonkörper 34, 35 aus mehreren Einzelteilen gebildet ist, welche mit Hilfe einer Überblattung, insbesondere mit einer Hakenblattung, einer Nut-Feder-Verbindung oder mit Hilfe einer Schwalbenschwanzverbindung stabförmig miteinander verbunden sind. Dadurch können mehrere Einzelstäbe leicht zu einem längeren Stab zusammengefügt werden. Vorteilhaft sind dabei insbesondere formschlüssige Verbindungen wie zum Beispiel die Hakenblattung oder die Schwalbenschwanzverbindung, da Teflon nur schwer verklebt werden kann.

Die Ausführungsbeispiele zeigen mögliche Ausführungsvarianten einer Anordnung mit einem Metallband 1 und einer ein textiles Band 4 umfassenden Reinigungseinrichtung respektive eine Bandgießanlage, wobei an dieser Stelle bemerkt sei, dass die Erfindung nicht auf die speziell dargestellten Ausführungsvarianten desselben/derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Beispielsweise kann die in der Fig. 7 dargestellte Anordnung in Kombination mit einer der in den Figuren 1 bis 6 dargestellten Anordnungen angewandt werden. Die in Fig. 8 und 9 dargestellten Dichtsystem können für die in den Figuren 1 bis 7 dargestellten Anordnungen verwendet werden. Insbesondere können die auf das Metallband 1 wirkende Absaugeinrichtung 18, die Mehrlippendichtung 10, 11, 16, 17 und die Leitbleche 28 auch unabhängig von den in Patentanspruch 1 angeführten Merkmalen die Basis einer unabhängigen Erfindung bilden. Insbesondere wird auch festgehalten, dass die dargestellten Vorrichtungen in der Realität auch mehr oder weniger Bestandteile als dargestellt umfassen können und in den Figuren bisweilen stark vereinfacht dargestellt sind.

Der Ordnung halber sei abschließend darauf hingewiesen, dass die dargestellten Vorrichtungen sowie ihre Bestandteile zum besseren Verständnis ihres Aufbaus darüber hinaus teilweise unmaßstäblich und/oder vergrößert und/oder verkleinert dargestellt wurden.

**Bezugszeichenaufstellung**

| | | | |
|---|---|---|---|
| 1 | Endlosband | 37 | Dichtfläche |
| 2 | Umlenkrolle | 38 | obere Haube |
| 3 | Umlenkrolle | 39 | untere Haube |
| 4 | textiles Band | 40 | Brücke |
| 5 | Andruckvorrichtung (Andruckrolle) | | |
| | | 41 | oberer Hohlraum |
| | | 42 | unterer Hohlraum |
| 6 | Haspel (zum Aufwickeln) | 43 | Dichtsystem |
| 7 | Haspel (zum Abwickeln) | | |
| 8 | Benetzungseinrichtung | | |
| 9 | Gehäuse | | |
| 10 | Mehrlippendichtung | | |
| | | | |
| 11 | Mehrlippendichtung | | |
| 12 | Schaber | | |
| 13 | Reinigungsbürste | | |
| 14 | Sprüheinrichtung | | |
| 15 | Gehäuse | | |
| | | | |
| 16 | Mehrlippendichtung | | |
| 17 | Mehrlippendichtung | | |
| 18 | Absaugeinrichtung | | |
| 19 | Einrichtung zur Aufbringung eines Werkstoffs (Trichter) | | |
| 20 | Umlenkrolle | | |
| | | | |
| 21 | Umlenkrolle | | |
| 22 | Umlenkrolle | | |
| 23 | Umlenkrolle | | |
| 24 | Dichtlippe | | |
| 25 | Hohlraum | | |
| | | | |
| 26 | Ablauf | | |
| 27 | Randstück | | |
| 28 | Leitblech | | |
| 29 | Dichtsystem | | |
| 30 | aufblasbarer flexibler Körper | | |
| | | | |
| 31 | aufblasbarer flexibler Körper | | |
| 32 | Halterung | | |
| 33 | Halterung | | |
| 34 | Teflonkörper | | |
| 35 | Teflonkörper | | |
| | | | |
| 36 | Dichtfläche | | |

## Patentansprüche

1. Anordnung, umfassend:
- ein Endlosband (1) aus Metall,
- wenigstens zwei Umlenkrollen (2, 3), um welche das Endlosband (1) geführt ist,
- einen ersten Antrieb, welcher dazu eingerichtet ist, das Metallband (1) zu bewegen,
- ein textiles Band (4),
- eine Andruckvorrichtung (5), welche dazu eingerichtet ist, das textile Band (4) gegen das Metallband (1) zu drücken, und
- einen zweiten Antrieb, welcher dazu eingerichtet ist, das textile Band (4) an der Andruckvorrichtung (5) vorbei zu bewegen, wobei
- eine quer zur Bewegungsrichtung des Metallbands (1) angeordnete Mehrlippendichtung (10, 11, 16, 17) vorgesehen ist,
- Hohlräume (25) zwischen den Lippen (24) der Mehrlippendichtung (10, 11, 16, 17) mit einem Ablauf (26) verbunden sind und
- eine Benetzungseinrichtung (8) vorgesehen ist, welche dazu vorbereitet ist, das textile Band (4) mit einer Flüssigkeit zu benetzen, wobei die Mehrlippendichtung (10, 11, 16, 17) einem Berührbereich zwischen dem textilen Band (4) und dem Metallband (1) in einer Hauptbewegungsrichtung des Metallbands (1) nachgelagert ist.

2. Anordnung nach Anspruch 1, **gekennzeichnet durch** eine Einrichtung (14) zum Auftragen einer Flüssigkeit auf das Metallband (1), welcher eine zweite Mehrlippendichtung (10, 11, 16, 17) in der Hauptbewegungsrichtung des Metallbands (1) nachgelagert ist.

3. Anordnung nach Anspruch 1 oder 2, **gekennzeichnet durch** eine mit dem zweiten Antrieb gekoppelte Haspel (6), auf der ein Ende des textilen Bands (4) befestigt ist.

4. Anordnung nach Anspruch 1 oder 2, **dadurch gekennzeichnet, dass** das textile Band (4) als Endlosband ausgeführt ist, welches um wenigstens zwei Umlenkrollen (20..23) geführt ist, von denen wenigstens eine mit dem zweiten Antrieb gekoppelt ist.

5. Anordnung nach einem der Ansprüche 1 bis 4, **dadurch gekennzeichnet, dass** eine Bewegungsgeschwindigkeit des Metallbands (1) größer ist als die des textilen Bands (4).

6. Anordnung nach einem der Ansprüche 1 bis 5, **dadurch gekennzeichnet, dass** das textile Band (4) aus einem Vlies, einem Gewebe, einem Gestrick, einem Geflecht, einem Gewirk, einem Filz oder einer Kombination der genannten Textilien besteht.

7. Anordnung nach einem der Ansprüche 1 bis 6, **gekennzeichnet durch** einen dem textilen Band (4) in einer Hauptbewegungsrichtung des Metallbands (1) vorgelagerten und auf das Metallband (1) wirkenden Schaber (12).

8. Anordnung nach Anspruch 7, **gekennzeichnet durch** eine zwischen dem Schaber (12) und dem textilen Band (4) angeordnete und auf das Metallband (1) wirkende Reinigungsbürste (13).

9. Anordnung nach einem der Ansprüche 1 bis 8, **gekennzeichnet durch** eine dem textilen Band (4) in einer Hauptbewegungsrichtung des Metallbands (1) nachgelagerte und auf das Metallband (1) wirkende Absaugeinrichtung (18).

10. Anordnung nach einem der Ansprüche 1 bis 9, **dadurch gekennzeichnet, dass** die Einrichtung (14) zum Auftragen einer Flüssigkeit auf das Metallband (1) als eine auf das Metallband (1) ausgerichtete Sprüheinrichtung (14) ausgebildet ist und im Randbereich des Metallbands (1) Leitbleche (28) angeordnet sind, welche schräg zur Mitte des Metallbands (1) ausgerichtet sind.

11. Bandgießanlage umfassend eine Anordnung nach einem der Ansprüche 1 bis 10 sowie eine Einrichtung zur Aufbringung eines Werkstoffs auf das Metallband (1).

## Claims

1. Arrangement, comprising:
- a continuous band (1) made of metal,
- at least two guiding rollers (2, 3) around which the continuous band (1) is guided,
- a first drive which is set up to move the metal strip (1),
- a textile band (4),
- a pressing device (5) set up to press the textile band (4) against the metal strip (1), and
- a second drive set up to move the textile band (4) past the pressing device (5),
wherein
- a multi-lip seal (10, 11, 16, 17) arranged transverse to the direction of movement of the metal strip (1) is provided,
- cavities (25) between the sealing lips (24) of the multi-lip seal (10, 11, 16, 17) are connected with a run-off (26), and
- a wetting device (8) is provided, which is set up to wet the textile band (4) with a liquid, wherein the multi-lip seal (10, 11, 16, 17) is arranged downstream from a contacting region between the textile band (4) and metal strip (1) in a main direction of movement of the metal strip (1).

2. The arrangement according to claim 1, **characterized by** a device (14) for applying a liquid onto the metal strip (1), downstream from which is a second multi-lip seal (10, 11, 16, 17) is arranged in the main direction of movement of the metal strip (1).

3. The arrangement according to claim 1 or 2, **characterized by** a reel (6) that is coupled with the second drive, and has one end of the textile band (4) attached thereto.

4. The arrangement according to claim 1 or 2, **characterized in that** the textile band (4) is configured as a continuous band, which is guided around at least two guiding rollers (20...23), at least one of which is coupled to the second drive.

5. The arrangement according to one of claims 1 to 4, **characterized in that** the speed of movement of the metal strip (1) is greater than that of the textile band (4).

6. The arrangement according to one of claims 1 to 5, **characterized in that** the textile band (4) is made from fleece, fabric, knitted fabric, braiding, meshed fabric, felt or a combination of said textiles.

7. The arrangement according to one of claims 1 to 6, **characterized by** a scraper (12) that is arranged upstream from the textile band (4) in a main direction of movement of the metal strip (1) and acts on the metal strip (1).

8. The arrangement according to claim 7, **characterized by** a cleaning brush (13) that is arranged between the scraper (12) and textile band (4) and acts on the metal strip (1).

9. The arrangement according to one of claims 1 to 8, **characterized by** a suction device (18) that is arranged downstream from the textile band (4) in a main direction of movement of the metal strip (1) and acts on the metal strip (1).

10. The arrangement according to one of claims 1 to 9, **characterized in that** the device (14) for applying a liquid onto the metal strip (1) is configured as a spraying device (14) oriented onto the metal strip (1), and that guide plates (28) are arranged in the edge area of the metal strip (1), aligned obliquely to the center of the metal strip (1).

11. A strip casting installation comprising an arrangement according to one of claims 1 to 10, as well as a device for applying a material onto the metal strip (1).

## Revendications

1. Agencement, comprenant :
- une bande sans fin (1) en métal,
- au moins deux poulies de guidage (2, 3), autour desquelles la bande sans fin est guidée (1),
- un premier dispositif d'entraînement, qui est adapté pour déplacer la bande métallique (1)
- une bande textile (4),
- un dispositif de compression (5) qui est adapté pour compresser la bande textile (4) contre la bande métallique (1), et
- un second dispositif d'entraînement qui est adapté pour déplacer la bande textile (4) le long du dispositif de compression (5), dans lequel
- un joint d'étanchéité multi-lèvres (10, 11, 16, 17) agencé transversalement à la direction de déplacement de la bande métallique (1) est prévu,
- des cavités (25) entre les lèvres (24) du joint d'étanchéité multi-lèvres (10, 11, 16, 17) sont reliées à un drain (26), et
- un dispositif d'humidification (8) est prévu, qui est préparé pour humidifier la bande textile (4) avec un fluide, dans lequel le joint d'étanchéité multi-lèvres (10, 11, 16, 17) est disposé en aval d'une zone de contact entre la bande textile (4) et la bande métallique (1) dans une direction principale de déplacement de la bande métallique (1).

2. Agencement selon la revendication 1, **caractérisé par** un dispositif (14) pour appliquer un fluide sur la bande métallique (1), qui est disposé en aval d'un second joint d'étanchéité multi-lèvres (10, 11, 16, 17) dans la direction principale de déplacement de la bande métallique (1).

3. Agencement selon la revendication 1 ou 2, **caractérisé par** une bobine (6) couplée au second dispositif d'entraînement, sur laquelle est fixée une extrémité de la bande textile (4).

4. Agencement selon la revendication 1 ou 2, **caractérisé en ce que** la bande textile (4) est réalisée sous la forme d'une bande sans fin, qui est guidée par au moins deux poulies de guidage (20..23), dont au moins une des deux est couplée au second dispositif d'entraînement.

5. Agencement selon l'une quelconque des revendications 1 à 4, **caractérisé en ce qu'**une vitesse de déplacement de la bande métallique (1) est plus élevée que celle de la bande textile (4).

6. Agencement selon l'une quelconque des revendications 1 à 5, **caractérisé en ce que** la bande textile (4) est constituée à partir d'un matériau non tissé, d'un tissu tissé, d'un tissu tricoté, d'un tissu tressé, d'un tissu à mailles, d'un feutre ou une combinaison de ces textiles.

7. Agencement selon l'une quelconque des revendications 1 à 6, **caractérisé par** un racloir (12) de la bande textile (4) disposé en amont dans une direction principale de déplacement de la bande métallique (1) et agissant sur la bande métallique (1).

8. Agencement selon la revendication 7, **caractérisé par** une brosse de nettoyage (13) disposée entre le racloir (12) et la bande textile (4), et agissant sur la bande métallique (1).

9. Agencement selon l'une quelconque des revendications 1 à 8, **caractérisé par** un dispositif d'aspiration (18) de la bande textile (4) disposé en aval dans une direction principale de déplacement de la bande métallique (1), et agissant sur la bande métallique (1).

10. Agencement selon l'une quelconque des revendications 1 à 9, **caractérisé en ce que** le dispositif (14) pour appliquer un fluide sur la bande métallique (1) est réalisé sous la forme d'un dispositif de pulvérisation (14) orienté vers la bande métallique (1), et des déflecteurs (28) sont agencés dans la zone de bord de la bande métallique (1), qui sont inclinés vers le milieu de la bande métallique (1).

11. Installation de coulée en bande comprenant un agencement selon l'une quelconque des revendications 1 à 10, et un dispositif pour appliquer un matériau sur la bande métallique (1).
